# EUROPEAN PATENT SPECIFICATION

(11) **EP 0 813 816 B1**
(45) Date of publication and mention of the grant of the patent: **03.11.1999**
(21) Application number: 97830288.3
(22) Date of filing: 17.06.1997
(51) Int. Cl.: A23F 5/12

(54) **A tablet for preparation of coffee drinks and a process for obtaining the tablet**
Eine Tablette zur Herstellung von Kaffeegetränken und Verfahren zur Gewinnung der Tablette
Comprimé pour la préparation de boissons de café et procédé pour l'obtention du comprimé

(30) Priority: 18.06.1996 IT MO960081
(43) Date of publication of application: 29.12.1997
(73) Proprietor: Ico Oleodinamici S.p.A., 41010 Frazione San Damaso (MO) (IT)
(72) Inventor: Barani, Ruggero, 41100 Modena (MO) (IT); Avanesions Zakaria Serozh, 47037 Rimini (RN) (IT)
(74) Representative: Gotra, Stefano

(56) References cited:
- DE-A- 3 501 785
- US-A- 4 414 198

## Description

The invention relates to a tablet for preparing coffee drinks, as well as a process for obtaining the tablet.

The prior art comprises effervescent pastilles and tablets which on coming into contact with water or another liquid produce a gas, usually CO₂, which breaks or disgregates the structure thereof, freeing the components.

For example, US patent US 4,414,198 describes an effervescent instant soluble coffee tablet which completely disintegrates in water. The manufacturing process is, however, extremely expensive and can lead to an undesirable change in the taste of the drink obtained.

The prior art also teaches the following patent publications: GB-A-2 196 228, DE-A-35 01 785 and DE-U-92 10 989. The aforementioned documents teach preparing coffee using tablets which dissolve in a hot liquid (usually water or milk). The tablets are made of soluble coffee and are distinguished by the fact that no residue remains. None of the documents teaches tablets made of ground but non-soluble coffee, i.e. coffee which has not been subjected to an extraction process of the soluble parts (generally using hot pressurised water), followed by dehydration.

EP-A-0 109 771, another prior art patent, describes preparation of drinks using completely soluble or lyophilized substances leaving no residues. It is widely known, however, that coffees prepared with coffee extract are inferior to those made with ground coffee.

Yet another patent publication, GB-A-2 027 662, relates to filter bags for coffee drink preparations, similar to those normally used for tea. The bags are used for infusions and are therefore not suitable for use in coffee machines. A further drawback is that the bags are made of a special filtering material which when thrown away becomes special-category refuse.

GB-A-2 074 838 is yet another patent describing the use of filter bags for infusions.

US 4,528,200 relates to mineralized drinks, including coffee-based beverages, obtained through a conventional infusion process.

Patent publication WO 92/01390 relates to the use of cellulose derivates as stabilizing agents for powdered food products, to be consumed after reconstitution with addition of water.

Patent publication EP-A-O 347 402 teaches the use of cellulose derivatives as stabilizing agents for powdered products, especially chocolate-based drinks.

GB-A-861 845 teaches production of soluble coffee powder agglomerates using a steam jet.

The publication of Chemical Abstracts, vol. 104, no. 13, abstract no. 108207, suggests adding polysaccharides (among which, for example, hydroxy propyl cellulose) to meat extracts before spray-drying, in order to preserve the natural taste thereof.

The food production sector also includes single-dose disposable packages for coffee preparation. Each package comprises a wrapper, generally made of a polymer or paper material, containing coffee powder. The package has a cylindrical shape so that it can be inserted in the filter-cup of traditional coffee machines. The package walls are liquid-permeable so that water can enter on one side of the package and the drink from the other.

A drawback of these packages relates to the package itself, which after use becomes a special-category refuse item needing a specific disposal technique, leading to an increase in cost.

The prior art is all susceptible to considerable improvements with the aim of eliminating the above-mentioned drawbacks.

The technical problem to be resolved is that of preparing coffee drinks using a tablet possessing the following requisites:
it must be highly compact so that it can be placed in a filter-cup and thus be usable in a normal coffee machine or percolator;
though compact, it must allow aromas and tastes to be obtained with only a simple passing-through of hot water;
it must not require a special filter package that after use might give rise to special-category refuse;
it must contain non-water-soluble ground coffee so that the resulting drink is of superior quality when compared to drinks obtained using only soluble coffee.

The above problem is solved with the tablet of the invention, as set out in the appended claims.

The tablet of the invention comprises a pressed mixture of ground coffee, having some parts which are soluble in water and others which are not, and at least one hydrophile substance able to absorb water and increase in volume. The table is conformed and sized so as to be insertable in a filter-cup and is destined in use to be subjected to an extraction process to remove the parts of the coffee which are soluble in water.

The present description is intended to include the various ersatz coffees, such as barley coffee, chicory, acorn coffee, chick-pea coffee and so on.

In the present invention, once the tablet comes into contact with water or another liquid it expands and releases the aromatic and soluble parts of the ground coffee. The function of the hydrophile agent is therefore essential to the invention, as it determines a modification in the tablet structure on contact with liquid.

In fact, experiments have revealed that in the absence of this hydrophile agent, the tablet allows the water to run over it with no penetration taking place. Even when the coffee powder tablet was made less compact, in the absence of the hydrophile substance the tablets merely cracked and thus afforded preferential entrance and exit routes for the water, which in this way could not reach the actual contents of the tablet.

The addition of the hydrophile substance guaranteed that the tablet expanded perfectly and completely, behaving as a porous body enabling the majority of the soluble aromatic substances to be extracted.

The coffee-powder-based tablet advantageously exhibits a shape which enables it to be inserted in a filter-cup of a coffee machine, occupying the whole space thereof. Thus a single-dose unit can be obtained and simply placed in said filter-cup, leading to greater preparation speed and constantly good drink quality; as well as extremely simple disposal of the used coffee by dumping in a bin, since the tablet is not wrapped in a liquid-permeable package and thus does not constitute special-category refuse.

The hydrophile substance is preferably selected from the following: pectine, cellulose, microcrystalline cellulose, cellulose derivates, bran, hydroxy-propyl-methyl-cellulose, methyl-cellulose, carbo-oxy-methyl-cellulose, hydroxy-ethylcellulose, hydroxy-propyl-cellulose, starches, pre-gelatinized starch, starch derivatives, alginic acid and other alginate derivatives, magnesium and aluminium silicates, clay and derivatives, bentonite, or mixtures of the above. In a further embodiment, the mixture comprises at least one further food product in granule and/or powder form, having parts which are soluble in water. The product can be selected from among the following: natural and/or artificial sweetening substances, powdered milk, powdered cocoa.

The invention also comprises a process for making tablets for the preparation of coffee drinks.

The process comprises mixing ground coffee (not completely soluble in water) with a hydrophile substance, and compressing the mixture obtained so as to produce to a tablet which is conformed and sized such as to be insertable in a filter-cup.

In a further embodiment of the process, the mixture, composed of ground coffee and at least one hydrophile substance, is granulated and a binding liquid (made of a comestible substance) added.

Subsequently the granules are dried and the dried granules compressed in order to obtain a dose of product in the form of a tablet.

The dried granules are preferably compressed with the addition of a lubricant. In a still further embodiment of the process, before the granule-pressing phase a predetermined quantity of additives can be introduced, comprising a further quantity of hydrophile substance.

The quantity of the hydrophile agent depends on various factors and is determined, time by time, according to parameters such as the physical characteristics of the coffee, the weight, formulation and type of hydrophile type.

Experiments have revealed that 10% of hydrophile substance is ideal with respect to the weight of the coffee powders, for a tablet of about 1.5 grams, while for a 7-gram tablet 30% of hydrophile substance is preferable.

To improve the mixture flow and increase tablet production speed the powder mixture can be granulated using food binding substances.

Hereinbelow some further embodiments of the present invention are described.

### Example 1

3kg. of finely-ground coffee mixture were granulated in a fluid bed with the addition of hydroxy-propyl-methyl-cellulose dissolved in water. The granules were then dried in the fluid bed at 30°C for two minutes. 200 grams of the granules were mixed with 20% weight of micro-crystalline cellulose with 0.2% of lubricant, and compressed into 20 mm.-diameter tablets. The tablets were placed in a 20.5mm. cup-filter and wet with water. On contact with the water the tablets expanded and pressed against the walls of the cup-filter. The tablets expanded homogeneously, allowing the water to filter through without any formation of preferential channels in the tablet.

### Example 2.

200 grams of granules obtained as in example 1 were mixed with 10% weight of carbo-oxy-methyl-cellulose and subsequently compressed as in example 1 above. The tablets obtained thus were treated as indicated in example 1, with the same results.

### Example 3.

200 grams of granules obtained as in example 1 above were mixed with 5% weight of pregelatinized starch and treated as in example 1, obtaining similar results.

### Example 4.

When the compositions of examples 1, 2 and 3 above were compressed into 35-mm. tablets, and were used in domestic-type percolators, very similar results were obtained in comparison with professional type coffee machines in use in cafés.

### Example 5.

When a tablet is made by compressing a first layer of coffee granules as indicated above and a second layer of sugar, sugared coffee is obtained. The sugar layer can be substituted with milk powder, cocoa powder or other substances. These substances can be incorporated in the granules, if so preferred.

### Example 6.

200 grams of micronized coffee were treated as in the preceding examples, obtaining similar results.

## Claims

1. A tablet for preparing coffee drinks, characterised in that it comprises a pressed mixture of ground coffee having parts which are soluble in water and parts which are not soluble in water, and comprising at least one hydrophile substance able to absorb water and increase in volume; said tablet being shaped and sized such as to be insertable in a filter-cup, and being destined in use to undergo an extraction process of the parts of the coffee which are soluble in water.

2. The tablet of claim 1, characterised in that the hydrophile substance is selected from the following: pectine, cellulose, microcrystalline cellulose, cellulose derivatives, bran, hydroxy-propyl-methyl-cellulose, methyl-cellulose, carbo-oxy-methyl-cellulose, hydroxy-ethyl-cellulose, hydroxy-propyl-cellulose, starches, pre-gelatinized starch, starch derivatives, alginic acid and other alginate derivatives, magnesium and aluminium silicates, clay and derivatives, bentonite, or mixtures thereof.

3. The tablet of claim 1 or 2, characterised in that said tablet is obtainable by pressing of a product in granular or powder form.

4. The tablet of any one of the preceding claims, characterised in that said mixture comprises at least a further food product in granule or in powder form, having parts which are soluble in water, preferably selected from: natural or artificial sweetening substances, milk powder, cocoa powder.

5. A process for realising a tablet for preparation of coffee drinks, characterised in that it comprises the following phases: making a mixture of ground coffee, having some parts which are soluble in water, and some parts which are not soluble in water, with a hydrophile substance; a compression of said mixture obtaining a tablet conformed and sized such as to be insertable in a filter-cup.

6. The process of claim 5, characterised in that it comprises the following phases: making a mixture of ground coffee, having some parts which are soluble in water, and some parts which are not soluble in water, with a hydrophile substance; a granulation of said mixture and addition thereto of a comestible binding agent; a drying of granules resulting from said mixture and said binding agent, and a compression thereof once dried to obtain a tablet conformed and sized such as to be insertable in a filter-cup.

7. The process of claim 6, characterised in that said dried granules are compressed with an addition of a lubricant.

8. The process of claim 6 or 7, characterised in that before the granule compressing phase, a predetermined quantity of additives is introduced, preferably comprising a further quantity of hydrophile substance.

## Patentansprüche

1. Eine Tablette zur Herstellung von Kaffeegetränken, **dadurch gekennzeichnet,** dass sie eine gepresste Mischung von gemahlenem Kaffee enthält sowie Anteile, welche in Wasser löslich sind, und Anteile, welche nicht in Wasser löslich sind, und die wenigstens eine wasserbindende Substanz enthält, in der Lage, Wasser aufzusaugen und im Volumen zuzunehmen; wobei die genannte Tablette von solcher Form und Grösse ist, dass sie in eine Filterschale eingesetzt werden kann, und wobei sie dazu bestimmt ist, während ihrer Verwendung einem Verfahren der Extraktion der Teile des Kaffees unterzogen zu werden, welche in Wasser löslich sind.

2. Tablette nach Patentanspruch 1, **dadurch gekennzeichnet,** dass die wasserbindende Substanz aus folgenden ausgewählt ist: Pektin, Zellulose, mikrokristalline Zellulose, Zellulosederivate, Kleie, Hydroxyl-Propyl-Methylzellulose, Methylzellulose, Carboxymethylzellulose, Hydroxy-Äthylzellulose, Hydroxyl-Propylzellulose, Stärken, vorgelatinierte Stärke, Stärkederivate, Alginsäure und andere Algenderivate, Magnesium- und Aluminiumsilikate, Ton und Derivate, Bentonit, oder Mischungen aus diesen.

3. Tablette nach Patentanspruch 1 oder 2, **dadurch gekennzeichnet,** dass die genannte Tablette durch Fressen eines Produktes in Granulat- oder Pulverform erhaltbar ist.

4. Tablette nach einem beliebigen der vorstehenden Patentansprüche, **dadurch gekennzeichnet,** dass die genannte Mischung wenigstens ein weiteres Lebensmittelprodukt in Granulat- oder Pulverform enthält, welches wasserlösliche Anteile hat und vorzugsweise ausgewählt wurde aus: natürlich oder künstlich süssenden Substanzen, Milchpulver, Kakaopulver.

5. Verfahren zur Herstellung einer Tablette zur Zubereitung von Kaffeegetränken, **dadurch gekennzeichnet,** dass es die folgenden Phasen enthält: Zubereitung einer Mischung aus gemahlenem Kaffee, enthaltend einige Anteile, welche in Wasser löslich sind, und einige Anteile, welche nicht in Wasser löslich sind, mit einer wasserbindenden Substanz; Pressen der genannten Mischung, wobei eine Tablette von solcher Form und Grösse erhalten wird, dass sie in eine Filterschale einsetzbar ist.

6. Verfahren nach Patentanspruch 5, **dadurch gekennzeichnet,** dass es die folgenden Phasen enthält: Zubereitung einer Mischung aus gemahlenem Kaffee, enthaltend einige Anteile, welche in Wasser löslich sind, und einige Anteile, welche nicht in Wasser löslich sind, mit einer wasserbindenden Substanz; Granulierung der genannten Mischung und Beimengung eines geniessbaren Bindemittels; Trocknen des aus der genannten Mischung und dem genannten Bindemittel erhaltenen Granulats und Pressen desselben, sobald es trocken ist, um eine Tablette von solcher Form und Grösse zu erhalten, dass sie in eine Filterschale einsetzbar ist.

7. Verfahren nach Patentanspruch 6, **dadurch gekennzeichnet,** dass das genannte getrocknete Granulat unter Beigabe eines Schmiermittels gepresst wird.

8. Verfahren nach Patentanspruch 6 oder 7, **dadurch gekennzeichnet,** dass vor der Pressphase des Granulats eine bestimmte Menge an Zusätzen beigegeben wird, die vorzugsweise eine weitere Menge von wasserbindenden Substanzen enthalten.

## Revendications

1. Un comprimé pour la préparation de boissons de café, caractérisé en ce qu'il comprend une mixture compressée de café moulu, ayant des parties solubles dans l'eau et d'autres parties non solubles dans l'eau, et comprenant au moins une substance hydrophile capable d'absorber de l'eau en augmentant son propre volume; ledit comprimé étant conformé et dimensionné de manière à pouvoir être inséré dans un gobelet porte-filtre, et étant destiné pendant son utilisation à subir un processus d'extraction des parties de caffé solubles dans l'eau.

2. Le comprimé de la revendication 1, caractérisé en ce que la substance hydrophile est sélectionnée parmis les substances suivantes: pectine, cellulose, cellulose microcristalline, dérivés de la cellulose, son, hydroxypropylméthylcellulose; méthylcellulose, carboxyméthylcellulose, hydroxyéthylcellulose, hydroxypropylcellulose, amidons, amidon pré-gélatiné, dérivés de l'amidon, acide alginique et autres dérivés de l'alginate, silicates de magnésium et d'aluminium, argile et dérivés, bentonite, ou mélange de ces derniers.

3. Le comprimé de la revendication 1 ou 2, caractérisé en ce que ledit comprimé est obtenu par compression d'un produit sous forme granulaire ou en poudre.

4. Le granulé de n'importe laquelle des revendications précédentes, caractérisé en ce que ladite mixture comprend au moins un autre produit alimentaire en granulés ou en poudre, ayant des parties solubles dans l'eau, préférablement sélectionné parmis: substances édulcorantes naturelles ou artificielles, lait en poudre, cacao en poudre.

5. Un procédé pour réaliser un comprimé pour la préparation de boissons de café, caractérisé en ce qu'il comprend les phases suivantes: production d'une mixture de café moulu, ayant des parties solubles dans l'eau et d'autres parties non solubles dans l'eau, avec une substance hydrophile; une compression de ladite mixture pour obtenir un comprimé conformé et dimensionné de manière à pouvoir être inséré dans un gobelet porte-filtre.

6. Le procédé de la revendication 5, caractérisé en ce qu'il comprend les phases successives: production d'une mixture de café moulu, ayant des parties solubles dans l'eau et d'autres parties non solubles dans l'eau, avec une substance hydrophile; une granulation de ladite mixture avec l'ajout d'un agent liant comestible; un séchage des granulés résultant de ladite mixture et dudit agent liant, et une compression de ceux-ci, une fois séchés, pour obtenir un comprimé conformé et dimensionné de manière à pouvoir être inséré dans un gobelet porte-filtre.

7. Le procédé de la revendication 6, caractérisé en ce que lesdits granulés séchés sont compressés avec l'ajout d'un lubrifiant.

8. Le procédé de la revendication 6 ou 7, caractérisé en ce qu'avant la phase de compression du granulé, une quantité déterminée d'additifs est introduite, préférablement comprenant une ultérieure quantité de substance hydrophile.
